# NEUE EUROPÄISCHE PATENTSCHRIFT

(11) **EP 1 103 411 B2**
(45) Veröffentlichungstag und Bekanntmachung des Hinweises auf die Entscheidung über den Einspruch: **15.12.2010**
(45) Hinweis auf die Patenterteilung: 24.11.2004
(21) Anmeldenummer: 00116549.7
(22) Anmeldetag: 01.08.2000
(51) Int. Cl.: B60N 2/02

(54) **Verstellvorrichtung für einen Fahrzeugsitz mit einer Spindel und einer zugeordneten Spindelmutter**
Adjusting device for a vehicle seat with a spindle and an associated spindle nut
Dispositif de réglage pour un siège de véhicule munis d'une vis et d'un écrou correspondant

(30) Priorität: 25.11.1999 DE 19956614
(43) Veröffentlichungstag der Anmeldung: 30.05.2001
(73) Patentinhaber: C.Rob. Hammerstein GmbH & Co.KG, 42699 Solingen (DE)
(72) Erfinder: Houston, Robert, 42799 Leichlingen (DE); Becker, Burkhard, 42657 Solingen (DE); Dick, Andre, 42697 Solingen (DE); Weniger, Burkhard, 59514 Welver (DE)
(74) Vertreter: Bauer, Wulf

(56) Entgegenhaltungen:
- EP-A- 0 979 750
- EP-B1- 0 227 694
- WO-A-86/06036
- DE-A- 3 919 378
- DE-A- 19 815 283
- DE-A1- 3 611 568
- DE-C1- 4 101 470
- DE-C2- 19 815 283
- DE-U- 9 006 859
- US-A- 4 802 374
- US-A- 5 320 413

## Beschreibung

Die Erfindung bezieht sich auf eine Verstellvorrichtung für einen Fahrzeugsitz nach derm Oberbegriff des Anspruchs 1. Sie ist bekannt aus WO-A-86/06036. Die Verstellleinrichtung weist ein erstes Verstellelement und ein zweites Verstellelement aufweist, das mit dem ersten Verstellelement bewegungsverbunden ist. Die Bewegungsverbindung ist entweder eine Schwenkverbindung oder eine Linearführung. Bei einer Ausbildung als Linearführung ist die Verstellvorrichtung insbesondere für eine Längsverstellvorrichtung eines Untergestells des Fahrzeugsitzes gegenüber dem Sitzteil vorgesehen. Die Verstellvorrichtung hat eine Spindel und eine zugeordnete Spindelmutter, die die Spindel umgreift. Die Spindel ist drehfest an dem ersten Verstellelement der Verstellvorrichtung fixiert. Die Spindelmutter ist drehbar an dem zweiten Verstellelement gelagert und bildet an ihrem Außenmantel ein Schneckenrad aus, welches mit einer Schnecke in Eingriff ist, die ihrerseits mit einem Drehantrieb verbindbar ist. Hierzu wird auf DE 198 15 283 A verwiesen.

Die vorliegende Erfindung stellt auch eine Weiterentwicklung der nicht vorveröffentlichten europäischen Anmeldung 99 111 911 (EP-A-0 979 750) mit Prioritätstag 12.08.1998 dar.

In der europäischen Anmeldung und in der WO 86/06036 ist bereits vorgeschlagen, die Spindelmutter aus Kunststoff zu fertigen. Die Ausbildung der Spindelmutter aus Kunststoff hat einerseits den Vorteil einer günstigen präzisen Herstellung und andererseits eines sehr geräuscharmen Laufes. Eine Spindelmutter aus Kunststoff hat allerdings nicht die Festigkeit einer metallischen Spindelmutter. Insbesondere bei unfallbedingten Belastungen der Verstellvorrichtung kann es dazu kommen, dass die Spindelmutter sich spreizt bzw. platzt. Unter einer unfallbedingten Belastung wird eine Belastung verstanden, die oberhalb der Belastungen eines normalen Fahrbetriebs liegt und bei den Sicherheitseinrichtungen, wie beispielsweise Airbags, Gurtstrammer und dergleichen ansprechen. Es handelt sich dabei um unfallbedingte Situationen.

Die Erfindung verfolgt das Ziel, weiterhin eine Kunststoffmutter verwenden zu können, dennoch aber die Nachteile, insbesondere die geringere Festigkeit gegenüber einer metallischen Spindelmutter, irgendwie aufzufangen.

Hiervon ausgehend ist es Aufgabe der Erfindung, die Verstellvorrichtung der eingangs genannten Art dahingehend weiterzubilden, dass die Spindelmutter aus Kunststoff hergestellt werden kann und dabei so mit einfachen Mitteln verstärkt ist, dass ein Platzen bzw. Spreizen der Spindelmutter im Belastungsfall der Spindel in Längsrichtung vermieden wird, jedenfalls erst bei viel höheren Belastungen eintritt, als ohne die erfindungsgemäßen Maßnahmen.

Diese Aufgabe wird gelöst durch eine Verstellvorrichtung mit den Merkmalen des Anspruchs 1.

Bei dieser Verstellvorrichtung ist der aus Kunststoff gefertigten Spindelmutter an jedem ihrer beiden axialen Endbereiche je einen Verstärkungstopf zugeordnet, der die Spindelmutter umschließt und mit ihr drehfest verbunden ist. Die beiden Verstärkungstöpfe sind soweit zum Mittelbereich der Spindelmutter gezogen, wie dies zulässig ist. Sie ragen also soweit zum Mittelbereich hin, dass sie nicht die Bewegung der Schnecke stören. Durch die Verstärkungstöpfe erhält die Spindelmutter eine deutliche Aussteifung ihrer Endbereiche, die Festigkeit des gesamten Systems wird auf diese Weise erhöht.

Die günstigen Eigenschaften einer Spindelmutter aus Kunststoff werden beibehalten. Auch wird die Montage nicht erschwert. Wie aus dem folgenden hervorgehen wird, wird sie tatsächlich sogar erleichtert. Schließlich bilden die beiden Verstärkungstöpfe ein einfach herzustellendes, kostengünstiges Teil, das in einer Weiterbildung sogar einstückig mit einer Lagerschale eines endseitigen Lagers für die Spindelmutter ausgebildet werden kann, so dass der zusätzliche mechanische Aufwand durch die Verstärkungstöpfe gering, die erreichte höhere Festigkeit aber erheblich ist.

In einer bevorzugten Weiterbildung hat daher der Verstärkungstopf zum Endbereich der Spindelmutter hin eine ringförmige Einwölbung, die eine Lagerfläche für ein Lager ausbildet. Insbesondere ist die Lagerfläche eines Kugellagers ausgebildet. Auf diese Weise wird die ohnehin notwendige Lagerfläche, die an einem Lagerring ausgebildet ist, mit dem Verstärkungstopf zu einem einzigen Teil kombiniert. Dadurch wird die Montage des Lagers erleichtert, der Aufwand aber nur geringfügig erhöht.

In einer bevorzugten Weiterbildung ist zwischen Verstärkungstopf und Spindelmutter ein aus elastischem Material gefertigter Ring, insbesondere ein Federring oder ein O-Ring aus Gummi, angeordnet. Er befindet sich vorzugsweise im Übergangsbereich zwischen Verstärkungstopf und Lagerfläche. Vorzugsweise ist der Verstärkungstopf an seinem zum Mittelbereich der Spindelmutter weisenden Ende direkt mit der Spindelmutter verbunden. Axial von hier aus nach außen gesehen ist das elastische Mittel vorgesehen, durch das eine Geräuschentwicklung des axial noch weiter außenliegenden Lagers gedämpft und eine Positionierung erreicht wird.

Vorzugsweise kann der Verstärkungstopf axial auf die Spindelmutter aufgeschoben werden. Dies ermöglicht eine sehr einfache Montage. Weiterhin hat er vorzugsweise einen Außendurchmesser, der dem Außendurchmesser des Gewindebereichs des Schneckenrades entspricht. Für den Verstärkungstopf wird also kein zusätzlicher Platz benötigt, vielmehr kann der Verstärkungstopf außerhalb des Eingriffsbereichs der Schnecke in einem Bereich angeordnet sein, in dem beim Stand der Technik noch Gewindegänge vorgesehen sind.

Der Verstärkungstopf ist aus Metall gefertigt. Dadurch wird die deutlich höhere Festigkeit erreicht. Vorzugsweise ist er mit einem radial verlaufenden Bereich versehen, der kreis-ringförmig ist. Dieser Bereich kann aber auch entfallen. Wesentlich ist ein axial verlaufender Mantelbereich, der im Wesentlichen zylindrisch ist.

In einer weiteren bevorzugten Ausbildung wird die Spindelmutter von einem Kunststoffgehäuse umgriffen, das endseitige Lager für die Lagerung der Spindelmutter aufnimmt und positioniert. Dieses Kunststoffgehäuse lässt sich günstig herstellen, es ist zudem leicht und geräuschdämpfend. In einer bevorzugten Weiterbildung wird es von einem Halter aus Metall umgriffen, der im wesentlichen U-förmig ist. Dieser Halter sorgt einerseits für mechanische Stabilität, andererseits kann er sich bei unfallbedingten Belastungen verbiegen und dadurch an der Spindel verhaken, so dass er einen Beitrag zur Festigkeit bei unfallbedingten Belastungen gibt.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:
- Fig. 1:: eine Draufsicht, teilweise schnittbildlich, auf eine Verstellvorrichtung für die Längsverstellung eines Fahrzeugsitzes gegenüber einer Bodengruppe eines Fahrzeuges und mit erfindungsgemässen Verstärkungstöpfen der Spindelmutter,
- Fig. 2:: das aufgeschnittene Teilstück im linken Bereich der Figur 1 in etwas anderer Ausführung und vergrössert dargestellt, ebenfalls mit Verstärkungstöpfen der Spindelmutter, und
- Fig. 3:: eine Darstellung ähnlich Figur 2, jedoch 90 Grad gedreht und mit einer Kunststoff-Spindelmutter und zwei Verstärkungstöpfen.

Wie die Figuren zeigen, hat die Verstellvorrichtung ein erstes Verstellelement 20, das hier als Bodenschiene, die mit einer Bodengruppe des Fahrzeugs verbindbar ist, eines Schienenpaars ausgeführt ist. Das zweite Verstellelement 22 ist eine gegenüber dieser Bodenschiene verschiebbare und mit ihr geführte, beispielsweise in ihr geführte Sitzschiene. Die Verstellrichtung ist durch den Doppelpfeil 24 kenntlich gemacht.

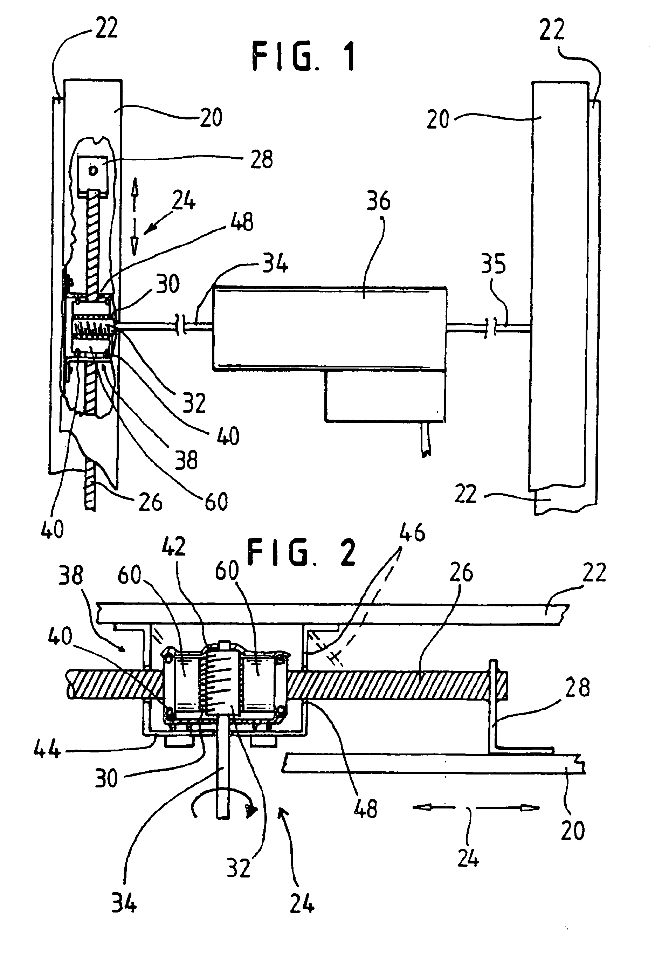

Das erste Verstellelement 20 ist mit einer Spindel 26 verbunden, die an ihrem in Figur 1 oberen Ende starr mittels eines Halteteils 28 in Form eines Winkels am ersten Verstellelement 20 angeordnet ist. Vorzugsweise ist auch das andere Spindelende nicht festgelegt, es kann aber auch in einer nachgiebigen Halterung, beispielsweise in einem Gummiblock, gehalten sein.

Die Spindel 26 wird von einer Spindelmutter 30 umgriffen. Sie ist aus Kunststoff hergestellt. Ihr Aussenmantel bildet ein Schneckenrad. Dieses ist mit einer Schnecke 32 in Eingriff. Die Schnecke ist über eine Welle 34 mit einem Elektromotor 36, der hier den Drehantrieb bildet, drehverbunden. Diese Welle 34 kann im Querschnitt relativ klein ausgebildet sein, sie kann beispielsweise ein Kunststoffstab sein. Besonders geeignet sind flexible Wellen, beispielsweise Tachometerwellen, für den Einsatz als Welle 34.

Wie Figur 1 zeigt, hat der Elektromotor 36 auch an seinem anderen Ende einen Drehausgang, anders ausgedrückt läuft seine Ausgangswelle axial durch ihn hindurch. Auf der anderen Seite, gleichachsig mit der Welle 34, ist eine Welle 35 gleicher Bauart vorgesehen, die eine Verstellvorrichtung der rechten Sitzseite antreibt, die mit derjenigen der linken Sitzseite gleich, vorzugsweise baugleich ist.

Die Spindelmutter 30 ist in einem Halter 38 drehbar angeordnet, zwischen Spindelmutter 30 und Halter 38 sind als Lager zwei Kugellager 40 vorgesehen. Wie insbesondere Figur 2 zeigt, ist die Spindelmutter 30 selbst in einem Käfig bzw. Gehäuse 42 aus Kunststoff untergebracht, die Kugellager sind zwischen Käfig 42 und Spindelmutter 30 angeordnet. Der Käfig 42 ist über Schrauben mit dem Halter 38 verbunden. Andere Auslegungen sind möglich.

Der Halter 38 hat eine Basis 44, die im wesentlichen parallel zum ersten Verstellelement 20 verläuft, sowie zwei hierzu rechtwinklige Flansche 46. Letztere haben eine Abwinklung, an dieser sind sie jeweils mit dem ersten Verstellelement 20 verbunden.

In den Flanschen 46 sind Durchlässe 48 für den freien Durchgang der Spindel 26 vorgesehen. Sie haben einen lichten Durchmesser, der etwas grösser als der Aussendurchmesser der Spindel 26 ist. Diese Durchlässe machen sich im normalen Betrieb nicht bemerkbar. Tritt jedoch eine unfallbedingte Verstellkraft zwischen den beiden Verstellelementen 20, 22 auf, so reisst die Spindelmutter 30 den mit ihr zusammenhängenden Halter 38 mit, der Halter stellt sich schräg, wie dies gestrichelt in Figur 2 angedeutet ist, siehe Flansche 46. Dadurch kommen die Ränder des Durchlasses 48 in Kontakt mit den Schraubenwindungen der Spindel 26, es kommt zu einem mechanischen Eingriff. Dadurch wird eine weitere unfallbedingte Bewegung zwischen den beiden Verstellelementen 20, 22 allgemein so stark abgebremst, dass sie beendet ist.

Den Durchlässen 48 sind entweder mit grossen Spiel die Spindel 26 umgreifende Muttern zugeordnet oder die Durchlässe sind selber radial geschlitzt und zu einer eingängigen Mutter geformt. Dadurch wird eine Verhakung bei unfallbedingten Belastungen verbessert. Diese Muttern sollen allerdings im praktischen Betrieb sich möglichst wenig bemerkbar machen, also möglichst mit viel Spiel in die Gewindegänge der Spindel 26 eingreifen, ohne im Betrieb zusätzliche Geräusche zu produzieren.

Wie aus den Figuren ersichtlich ist, hat die Spindelmutter 30 einen Mittelbereich, der etwas breiter ist als der Durchmesser der Antriebsschnecke 32. In diesem Mittelbereich ist ein ungehindertes Zusammenwirken zwischen der Antriebsschnecke 32 und der aus Kunststoff gefertigten Spindelmutter 30 möglich.

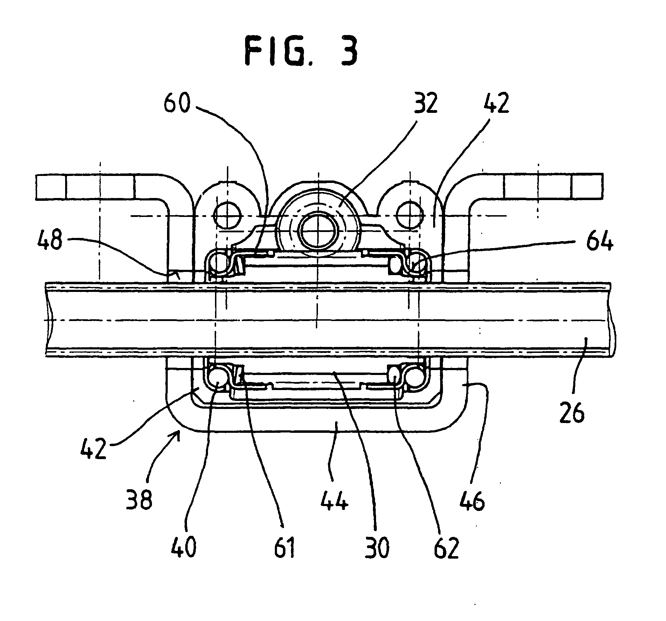

Beidseitig dieses Mittelbereichs ist die Spindelmutter 30 durch jeweils einen Verstärkungstopf 60 umgriffen und abgedeckt. Der Verstärkungstopf 60 hat im wesentlichen die Form eines Ringes. Er ist aus Metall, insbesondere Stahl, gefertigt. Im Ausführungsbeispiel nach Figur 1 überdeckt er auch die Stirnseite der Spindelmutter 30, er hat also einen zylindrischen Ringbereich und einen radialen Ringbereich. In der Ausführung nach Figur 2 ist er als zylindrischer Ring ohne radiale Bereiche ausgebildet. Im wesentlichen soll nun aber die Ausführung gemäss Figur 3 detailliert beschrieben werden:

Wie auch in den vorigen Ausführungen sind die beiden endseitigen Verstärkungstöpfe für die Spindelmutter 30 nahtlose Ringteile aus Blech mit beispielsweise 1 mm Wandstärke. Sie sind auf die freien Enden der Spindelmutter 30 aufgeschoben und in geeigneter Weise fixiert.

Wie Figur 3 zeigt, erstreckt sich das Gewinde der Spindelmutter 30 nur in einem Mittelbereich, der etwa 40 % der Gesamtlänge der Spindel ausmacht. Die Gesamtlänge der Spindel liegt bei etwa 25 mm.

Ausserhalb dieses Mittelbereichs verjüngt sich die Spindelmutter 30 stufig zu ihren freien Enden hin. Zunächst in einer ersten Stufe ist der Aussendurchmesser so reduziert, dass etwa nur noch die Hälfte der Höhe der Gewindegänge der Spindelmutter 30 verbleibt. In einer weiteren Stufe ist der Durchmesser deutlich unterhalb des Kerndurchmessers des Gewindes reduziert. Dort wird eine Innenecke ausgebildet, in der links ein axial federnder Ring 61, z.B. eine Wellscheibe, Tellerfeder oder Ringfeder, und rechts ein O-Ring 62 angeordnet sind. In einer dritten Stufe ist der Durchmesser noch einmal geringfügig weiter reduziert. Dort befindet sich ein Lager 40 in Form eines Kugellagers. Im Bereich der ersten Stufe liegt der Verstärkungstopf 60 jedes Endbereichs radial an der Spindelmutter an und wird auf diese Weise zentriert. Axial verbleibt ein geringer Luftspalt, um Fertigungstoleranzen ausgleichen zu können. Der Aussendurchmesser des Verstärkungstopfes 60 entspricht dabei im wesentlichen dem Aussendurchmesser des Mittelbereichs.

Ausgehend vom Mittelbereich verringert sich der Durchmesser des Verstärkungstopfes 60 hinter dem Ring bzw. dem O-Ring 62, dort bildet der Verstärkungstopf 60 eine Führungsfläche 64 in Form einer Hohlkehle für die Kugeln des Lagers 40. Anders ausgedrückt ist die innere Lagerschale des Kugellagers 40 axial verlängert zum Mittelbereich hin und bildet dort den eigentlichen Verstärkungstopf 60 aus. Wie Figur 3 zeigt, hat das Lager 40 auch eine äussere Lagerfläche gebildet durch einen entsprechenden Ring, dessen Aussendurchmesser im wesentlichen mit dem Aussendurchmesser des Verstärkungstopfes 60 übereinstimmt. Dieser Ring ist in einem Käfig 42 in Form eines Kunststoffgehäuses gehalten. Dieses Kunststoffgehäuse nimmt auch die Antriebsschnecke 32 auf. Es ist formgenau eingepasst in den Hohlraum, den der Halter 38 ausbildet. Aufgrund der axialen Elastizität der Ringe 61, 62 (insbesondere des Federrings 61) wird die Anordnung aus Spindelmutter 30, zwei Verstärkungstöpfen 60 und zwei Lagern 40 im Gehäuse 42 positioniert.

## Patentansprüche

1. Verstellvorrichtung für einen Fahrzeugsitz, die ein erstes Verstellelement (20) und ein zweites Verstellelement (22) aufweist, das mit dem ersten Verstellelement (20) bewegungsverbunden ist, insbesondere Längsverstellvorrichtung eines Untergestells des Fahrzeugsitzes gegenüber einem Sitzteil, wobei die Verstellvorrichtung (24) eine Spindel (26) und zugeordnete Spindelmutter (30) hat, die die Spindel (26) umgreift und wobei die Spindel (26) drehfest an dem ersten Verstellelement (20) der Verstellvorrichtung fixiert ist und die Spindelmutter (30) a) drehbar in dem zweiten Verstellelement (22) gelagert ist, b) an ihrem Außenmantel ein Schneckenrad ausbildet, welches mit der Schnecke (32), die mit einem Drehantrieb (36) verbindbar ist, in Eingriff ist, und aus Kunststoff gefertigt ist,
**dadurch gekennzeichnet, dass** die Spindelmutter (30) an jedem ihrer beiden axialen Endbereiche von einem aus Metall gefertigten Verstärkungstopf (60) umgriffen ist, der den jeweiligen Endbereich der Spindelmutter (30) ringförmig umschließt und mit ihr drehfest verbunden ist, dass die beiden Verstärkungstöpfe (60) sich soweit wie möglich zum Mittelbereich der Spindelmutter (30) hin erstrecken, wie dies, ohne die Bewegung der Schnecke (32) zu stören, zulässig ist, und **dass** die Endbereiche der Spindelmutter (30) einen Außendurchmesser haben, der kleiner ist als der Außendurchmesser des Mittelbereichs der Spindelmutter (30).

2. Verstellvorrichtung nach Anspruch 1, **dadurch gekennzeichnet, dass** der Verstärkungstopf (60) zum Endbereich der Spindelmutter (30) hin eine ringförmige Einwölbung aufweist, die eine Lagerfläche für ein Lager (40), insbesondere für ein Kugellager, ausbildet.

3. Verstellvorrichtung nach Anspruch 1, **dadurch gekennzeichnet, dass** zwischen Verstärkungstopf (60) und Spindelmutter (30) ein aus elastischem Material gefertigter Ring (61, 62), insbesondere ein O-Ring (62) aus Gummi oder eine Federscheibe (61) aus Metall, angeordnet ist.

4. Verstellvorrichtung nach Anspruch 1, **dadurch gekennzeichnet, dass** die Endbereiche der Spindelmutter (30) mindestens eine Stufe aufweisen, in der der Durchmesser der Spindelmutter (30) zu ihrem freien, axialen Ende hin verjüngt.

5. Verstellvorrichtung nach Anspruch 1, **dadurch gekennzeichnet, dass** der Außendurchmesser der Spindelmutter (30) in ihren Endbereichen zum freien Ende hin gestuft kleiner wird und dass der Verstärkungstopf (60) axial auf den jeweiligen Endbereich aufgeschoben ist.

6. Verstellvorrichtung nach Anspruch 1, **dadurch gekennzeichnet, dass** am freien Endbereich der Spindelmutter (30) ein Lager (40), insbesondere ein Kugellager, vorgesehen ist.

7. Verstellvorrichtung nach Anspruch 1, **dadurch gekennzeichnet, dass** die Schnecke (32) eine quer zur Achse der Spindel (26) verlaufende Drehachse hat und unmittelbar mit einem Elektromotor (36) verbindbar ist.

8. Verstellvorrichtung nach Anspruch 1, **dadurch gekennzeichnet, dass** die Spindelmutter (30) von einem Kunststoffgehäuse (42) umgriffen ist, und dass zwischen diesem Kunststoffgehäuse (42) und der Spindelmutter (30) Lager (40) ausgebildet sind, die insbesondere am freien Ende der Spindelmutter (30) vorgesehen sind.

9. Verstellvorrichtung nach Anspruch 8, **dadurch gekennzeichnet, dass** das Kunststoffgehäuse von einem U-förmig ausgebildeten Halter (38) umgriffen ist, der eine Basis (44) und zwei zu dieser vorspringende Flansche (46) hat, in denen sich jeweils ein Durchlass (48) für die Spindel (26) befindet.

## Claims

1. An adjusting device for a vehicle seat having a first adjusting element (20) and a second adjusting element (22) that is motion-linked to the first adjusting element (20), particularly a length-adjustment device for an underframe of the vehicle seat relative to a seat part, whereby the adjusting device (24) has a spindle (26) and an associated spindle nut (30) encompassing the spindle (26) and whereby the spindle (26) is non rotatably fastened onto the first adjusting element (20) of the adjusting device and the spindle nut (30) a) is rotatably carried in the second adjusting element (22), b) forms on its outer case a worm wheel that engages the worm (32) which may be connected to a multi turn actuation (36) and is made of synthetic material, **characterized in that** the spindle nut (30) is encompassed on each of its two axial end areas by a reinforcing barrel (60) which is made of metal and encircles the corresponding end area of the spindle nut (30) and is non rotatably linked to it, **in that** the two reinforcing barrels (60) are extending as far as admissible towards the central area of the spindle nut (30) that is, they extend so far toward the central area as they do not hinder the motion of the worm (32), and **in that** the end areas of the spindle nut (30) have a smaller outer diameter than the outer diameter of the central area of the spindle nut (30).

2. An adjusting device according to claim 1, **characterized in that** the reinforcing barrel (60) is provided toward the end area of the spindle nut (30) with an annular vault forming a bearing surface for a bearing (40), in particular for a ball bearing.

3. An adjusting device according to claim 1, **characterized in that** a ring (61, 62) made of elastic material, particularly an O-ring (62) made of rubber or a metallic spring washer (61), is arranged between the reinforcing barrel (60) and the spindle nut (30).

4. An adjusting device according to claim 1, **characterized in that** the end areas of the spindle nut (30) are provided with at least one step in which the diameter of the spindle nut (30) tapers toward its free axial end.

5. An adjusting device according to claim 1, **characterized in that** the outer diameter of the spindle nut (30) gets stepwisely smaller in its end areas toward the free end and that the reinforcing barrel (60) is pushed axially onto the corresponding end area.

6. An adjusting device according to claim 1, **characterized in that** a bearing (40), in particular a ball bearing, is provided at the free end of the spindle nut (30).

7. An adjusting device according to claim 1, **characterized in that** the worm (32) has a rotational axis running across the axis of the spindle (26) and that it may be connected directly with an electric motor (36).

8. An adjusting device according to claim 1, **characterized in that** the spindle nut (30) is encompassed by a plastic casing (42) and that bearings (40) are provided between this plastic casing (42) and the spindle nut (30), said bearings being particularly provided at the free end of the spindle nut (30).

9. An adjusting device according to claim 8, **characterized in that** the plastic casing is encompassed by an U-shaped holder (38) which has a base (44) and two flanges (46) projecting toward said base, a passageway (48) for the spindle (26) being provided in each of said flanges (46).

## Revendications

1. Dispositif de réglage pour un siège de véhicule, qui présente un premier élément de réglage (20) et un deuxième élément de réglage (22) qui est relié à mouvement au premier élément de réglage (20), en particulier dispositif de réglage longitudinal d'un châssis de base du siège de véhicule par rapport à une partie de siège, le dispositif de réglage (24) présentant une broche (26) et un écrou (30) associé de la broche, qui embrasse la broche (26), et la broche (26) étant fixée de manière solidaire en rotation sur le premier élément de réglage (20) du dispositif de réglage, et l'écrou (30) de la broche a) étant logé à rotation dans le deuxième élément de réglage (22), b) formant sur sa nappe extérieure une roue tangente, qui est en prise avec la vis sans fin (32) laquelle peut être reliée à une commande de rotation (36), et c) étant réalisé en matière plastique, **caractérisé par le fait que** l'écrou (30) de la broche est embrassé, sur chacune de ses deux zones terminales axiales, par un pot de renforcement (60) qui est fabriqué en métal et qui enveloppe en anneau la zone terminale respective de l'écrou (30) de la broche et est relié à celui-ci d'une manière solidaire en rotation, que les deux pots de renforcement (60) s'étendent autant que possible vers la zone centrale de l'écrou (30) de la broche, donc dans la mesure où ceci est admissible sans déranger le mouvement de la vis sans fin (32), et que les zones terminales de l'écrou (30) de la broche présentent un diamètre extérieur qui est inférieur au diamètre extérieur de la zone centrale de l'écrou (30) de la broche.

2. Dispositif de réglage selon la revendication 1, **caractérisé par le fait que,** vers la zone terminale de l'écrou (30) de la broche, le pot de renforcement (60) présente un bombement annulaire vers l'intérieur qui forme une surface d'appui pour un roulement (40), en particulier pour un roulement à billes.

3. Dispositif de réglage selon la revendication 1, **caractérisé par le fait qu**'un anneau (61, 62) réalisé en matière élastique, en particulier un joint torique (O-ring) (62) en caoutchouc ou une rondelle élastique (61) en métal est disposé entre le pot de renforcement (60) et l'écrou (30) de la broche.

4. Dispositif de réglage selon la revendication 1, **caractérisé par le fait que** les zones terminales de l'écrou (30) de la broche présentent au moins un gradin dans lequel le diamètre de l'écrou (30) de la broche se rétrécit vers son extrémité libre axiale.

5. Dispositif de réglage selon la revendication 1, **caractérisé par le fait que** le diamètre extérieur de l'écrou (30) de la broche diminue graduellement dans ses zones terminales vers l'extrémité libre et que le pot de renforcement (60) est poussé axialement sur la zone terminale respective.

6. Dispositif de réglage selon la revendication 1, **caractérisé par le fait qu**'un roulement (40), en particulier un roulement à billes, est prévu sur la zone terminale libre de l'écrou (30) de la broche.

7. Dispositif de réglage selon la revendication 1, **caractérisé par le fait que** la vis sans fin (32) présente un axe de rotation s'étendant transversalement à l'axe de la broche (26) et peut être reliée directement à un moteur électrique (36).

8. Dispositif de réglage selon la revendication 1, **caractérisé par le fait que** l'écrou (30) de la broche est embrassé par un boîtier en matière plastique (42), et que des roulements (40) sont réalisés entre ce boîtier en matière plastique (42) et l'écrou (30) de la broche, lesdits roulements étant prévus en particulier à l'extrémité libre de l'écrou (30) de la broche.

9. Dispositif de réglage selon la revendication 8, **caractérisé par le fait que** le boîtier en matière plastique est embrassé par un support (38) en forme d'U qui présente une base (44) et deux flasques (46) qui font saillie vers cette dernière et dans lesquelles se trouve respectivement un passage (48) pour la broche (26).
